(19) Europäisches Patentamt

European Patent Office

Office européen des brevets

(11) **EP 1 837 215 B1**

(12) **EUROPEAN PATENT SPECIFICATION**

(45) Date of publication and mention
of the grant of the patent:
**24.09.2008  Bulletin 2008/39**

(51) Int Cl.:
**B60H 1/00** (2006.01)

(21) Application number: **07005619.7**

(22) Date of filing: **19.03.2007**

(54) **Vehicular air conditioner**

Fahrzeugklimaanlage

Climatiseur de véhicule

(84) Designated Contracting States:
**DE FR GB**

(30) Priority:  **24.03.2006   JP 2006084023**

(43) Date of publication of application:
**26.09.2007   Bulletin 2007/39**

(73) Proprietor: **Calsonic Kansei Corporation
Tokyo 164-8602 (JP)**

(72) Inventor: **Takahashi, Torahide
Tokyo 164-8602 (JP)**

(74) Representative: **Grünecker, Kinkeldey,
Stockmair & Schwanhäusser
Anwaltssozietät
Leopoldstrasse 4
80802 München (DE)**

(56) References cited:
**US-A1- 2004 079 096        US-A1- 2004 182 097
US-A1- 2005 132 731**

**Description**

**BACKGROUND OF THE INVENTION**

1. Field of the Invention

The present invention relates to a vehicular air conditioner, and, more particularly to an operation control of a refrigeration cycle device using CO2 refrigerant.

2. Description of the Related Art

In recent years, CO2 (carbon dioxide) which has little effect on environment gains the spotlight as a refrigerant of a refrigeration cycle device used in a vehicular air conditioner. The critical temperature of the CO2 refrigerant is extremely low. Therefore, when the outside air temperature is high, the refrigerant temperature in the radiator (gas cooler) becomes higher than the critical temperature, and CO2 is not condensed at an outlet of the radiator.
The refrigerant temperature at the outlet of the radiator is determined by the radiation ability of the radiator and the outside air temperature, but since the outside air temperature can not be controlled, the refrigerant pressure at the outlet side of the compressor is usually controlled. For example, when the outside air temperature is high, in order to secure sufficient cooling ability, an opening of an expansion valve provided on the side of the outlet of the radiator is reduced, thereby increasing the refrigerant pressure.
Concerning the operation control of a refrigeration cycle device using CO2 as a refrigerant, it is proposed to enhance the coefficient of performance by changing the opening of the expansion valve in accordance with the outlet refrigerant temperature of the radiator (gas cooler) to control the refrigerant pressure (Japanese Patent Application Laid-open Nos. 2000-88364 and 2005-145389). It is known to control throttle means or a compressor based on the refrigerant temperature and refrigerant pressure detected between the radiator and an internal heat exchanger (Japanese Patent Application Laid-open No. 2002-130849). Document US 2005/0132731, which is considered as the closest prior art, discloses another air conditioner of this kind.
As indicated in each of the above conventional techniques, the refrigerant pressure can be increased by reducing the opening of the expansion valve, but if the refrigerant pressure becomes higher, the refrigerant temperature at the outlet of the compressor is also increased. The refrigerant temperature at the radiator outlet is suppressed to a predetermined level by sufficient cooling wind during running of a vehicle, but when the vehicle is idling while waiting at a traffic signal or at the time of a traffic hold-up, or when there is almost no cooling wind when the vehicle stops or runs at low speed, the refrigerant temperature is abruptly increased at the compressor outlet. Cooling wind which once passes through the radiator and whose temperature rises comes forward and again passes through the radiator (i.e., reversely flows), and this further increases the refrigerant temperature. If the refrigerant temperature excessively rises, a device protection function starts and the operation of the compressor is stopped. Therefore, the operation of the radiator outlet is stopped, and there is a problem that the temperature of the conditioned air is increased.

**SUMMARY OF THE INVENTION**

It is an obj ect of the present invention to provide a vehicular air conditioner capable of stably operating a refrigeration cycle device even at the time of running and idling of a vehicle, and capable of maintaining comfort in the vehicle.
The present invention provides a vehicular air conditioner comprising a compressor for compressing a refrigerant, a radiator for cooling the refrigerant compressed by the compressor by heat exchange with cooling wind, a temperature sensor for detecting a refrigerant temperature on the side of an outlet of the radiator, a decompressor for decompressing the refrigerant which passes through the radiator in accordance with a designated decompression amount, an evaporator for evaporating the refrigerant which passes through the decompressor by heat exchange with conditioned wind, a gas/liquid separator for separating the refrigerant discharged from the evaporator into gas and liquid, a vehicle speed detector for detecting a vehicle speed, and a control unit for designating the decompression amount for the decompressor, wherein the control unit calculates a target refrigerant pressure using the refrigerant temperature detected by the temperature sensor, a vehicle speed detected by the vehicle speed detector and a control equation defined for calculating the target refrigerant pressure, and the control unit designates the decompression amount corresponding to the target refrigerant pressure for the decompressor.
In the present invention, it is preferable that in the control equation defined for calculating the target refrigerant pressure, the control unit defines a difference between a temperature of outside air and a temperature of air which reversely flows through the radiator, as a maximum value of temperature to be used as a correction value.
In the present invention, it is preferable that the control unit includes, in the control equation defined for calculating the target refrigerant pressure, a temperature correction term obtained by dividing, by a vehicle speed detected by the vehicle speed detector, a correction value which is a difference between a temperature of outside air and a temperature of air which reversely flows through the radiator.

**BRIEF DESCRIPTION OF THE DRAWINGS**

Fig. 1 is a system block diagram of a vehicular air conditioner according to an embodiment of the present invention; and
Fig. 2 is a flowchart showing processing procedure for calculating the target refrigerant pressure in the refrigeration cycle device according to an embodiment of the present invention.

**DETAILED DESCRIPTION OF THE PREFERRED EMBODIMENTS**

Embodiments of a vehicular air conditioner according to the present invention will be explained with reference to the accompanying drawings.

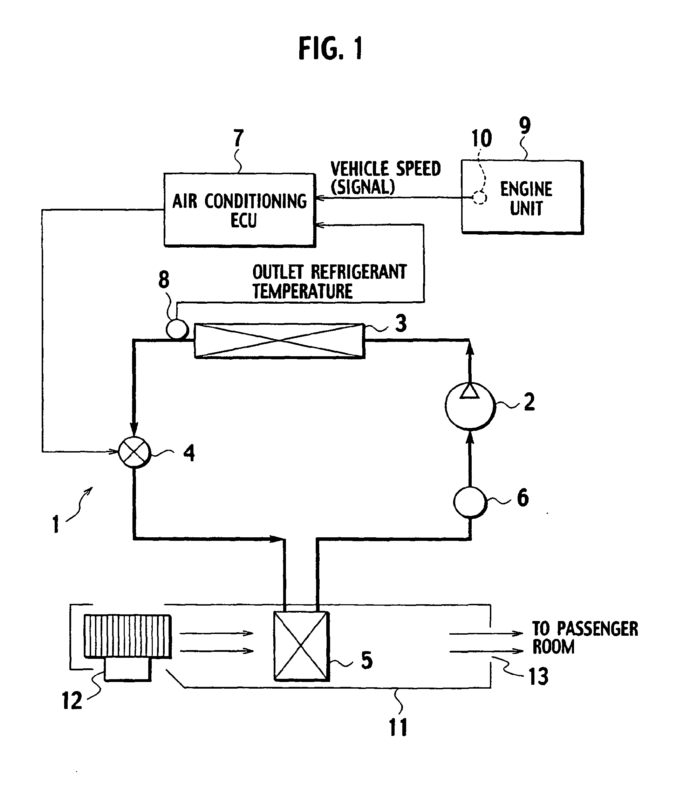

Fig. 1 is a system block diagram of a vehicular air conditioner according to an embodiment of the present invention. The vehicular air conditioner of the embodiment includes a refrigeration cycle device 1 which circulates $CO_2$ refrigerant to heat-exchange between the refrigerant and cooling wind.
The refrigeration cycle device 1 includes a compressor 2, a radiator 3, an expansion valve (decompressor) 4, an evaporator' 5 and an accumulator (gas/liquid separator) 6. These compressor 2, radiator 3, expansion valve 4, evaporator 5 and accumulator 6 are connected to one another through pipes. The refrigeration cycle device 1 circulates, in this device, $CO_2$ refrigerant provided with kinetic energy by the compressor 2. An air conditioning ECU (control unit) 7 for controlling a decompression amount of the expansion valve 4 is connected to the refrigeration cycle device 1.
The compressor 2 is disposed outside of a passenger room such as an engine room. The compressor 2 compresses a low pressure gaseous refrigerant sucked from the accumulator 6, and discharges the same into the radiator 3 as a high temperature and high pressure gaseous refrigerant. The compressor 2 is configured to compress $CO_2$ refrigerant by driving force of a motor (not shown).
The radiator 3 cools high temperature and high pressure gaseous refrigerant discharged from the compressor 2. The radiator 3 is disposed outside of the passenger room. More specifically, the radiator 3 is disposed in front of the engine room so that cooling wind (running wind) introduced as outside air impinges on the radiator 3. The radiator 3 heat-exchanges between the high temperature and high pressure gaseous refrigerant passing through the radiator 3 and the blowing cooling wind, thereby cooling the heat of the high temperature and high pressure gaseous refrigerant. A temperature sensor (temperature detector) 8 which detects the outlet refrigerant temperature is provided on the side of the outlet of the radiator 3. The outlet refrigerant temperature detected by the temperature sensor (temperature detector) 8 is sent to the air conditioning ECU 7.
The expansion valve 4 decompresses (expands) the high temperature and high pressure gaseous refrigerant which is output from the radiator 3 and atomizes the same into a low temperature and low pressure nebulosus refrigerant. The expansion valve 4 decompresses the $CO_2$ refrigerant and controls the outlet refrigerant pressure of the radiator 3. The decompressing amount of the expansion valve 4 of the present embodiment is controlled by an electric signal from the later-described air conditioning ECU 7. A pressure-reducing valve disclosed in Japanese Patent Application No. 2000-206780 can be used as the expansion valve 4.
The evaporator 5 is disposed in an air conditioning duct 11. The evaporator 5 makes a low temperature and low pressure nebulosus refrigerant supplied from the radiator 3 through the expansion valve 4 absorb heat of conditioned air generated by an air conditioning fan 12. The refrigerant which is brought into the low temperature and low pressure nebulosus refrigerant by the expansion valve 4 passes through the evaporator 5. At that time, the refrigerant absorbs heat of the conditioned air flowing through the air conditioning duct 11 and vaporizes. The conditioned air whose heat is absorbed by the refrigerant in the evaporator 5 is dehumidified and becomes cooling wind, and is sent into the passenger room from a blowoff opening 13.
The accumulator 6 decomposes a refrigerant discharged from the evaporator 5 into gas and liquid, and stores liquid refrigerant. Gaseous refrigerant separated from the liquid refrigerant is sent to the compressor 2.
The air conditioning ECU 7 comprises a microcomputer including a CPU, a RAM, a ROM and an I/O interface. The outlet refrigerant temperature detected by the temperature sensor 8 and a vehicle speed (signal) detected by a vehicle speed sensor (vehicle speed detector) 10 connected to a transmission gear of an engine unit 9 are input to the air conditioning ECU 7. The air conditioning ECU 7 calculates a target refrigerant pressure using the outlet refrigerant temperature, the vehicle speed and a later-described control equation (2) defined for calculating the target refrigerant pressure. The air conditioning ECU 7 converts a decompression amount corresponding to the target refrigerant pressure into an electric signal (opening/closing duty signal), and sends the same to the expansion valve 4.

The air conditioning ECU 7 can comprise a plurality of microcomputers. The air conditioning ECU 7 can perform a plurality of control functions in addition to the control of the decompression amount of the expansion valve 4.

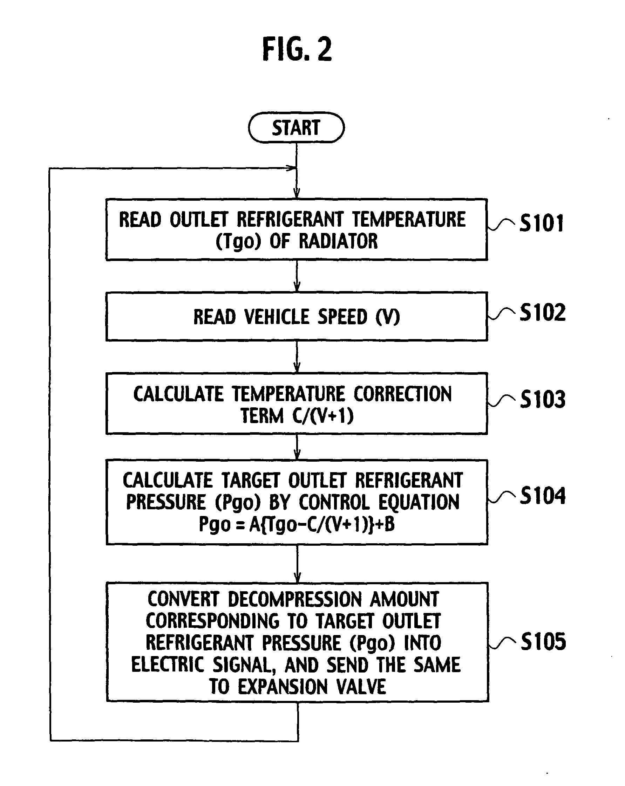

Next, in the refrigeration cycle device 1 of the present embodiment, processing procedure for calculating the target refrigerant pressure will be explained based on a flowchart shown in Fig. 2. The processing explained blow is started when a passenger turns ON an air conditioning switch provided on a control panel of an air conditioner.

First, the air conditioning ECU 7 reads an outlet refrigerant temperature Tgo of the radiator 3 detected by the temperature sensor 8 (step S101). Then, a vehicle speed V detected by the vehicle speed sensor 10 is read (step S102). Then, the air conditioning ECU 7 calculates a temperature correction term included in the control equation. The control equation defined for calculating the target refrigerant pressure will be explained.

In the conventional control, the following general control equation (1) defined for calculating the target refrigerant pressure is used:

$$Pgo = A \times Tgo + B \; \cdots \; (1)$$

wherein

Pgo: target refrigerant pressure (target outlet refrigerant pressure of the radiator 3),

Tgo: outlet refrigerant temperature of the radiator 3, and

A, B: constants.

In the control equation (1), since the Tgo and Pgo are proportional to each other, Pgo is increased together with Tgo even when there is almost no cooling wind when a vehicle is idling. Thus, the opening of the expansion valve 4 is reduced, the outlet refrigerant temperature of the compressor 2 is increased, the device protection functions, the compressor 2 is stopped, the operation of the refrigeration cycle device 1 is stopped, and the temperature of the conditioned air is increased.

In the present embodiment, the control equation defined for calculating the target refrigerant pressure Pgo is as follows:

$$Pgo = A(Tgo - C/(V+1)) + B \; \cdots \; (2),$$

wherein

C: temperature (constant) which is increased by reverse flow of air through the radiator 3, and

V: vehicle speed (number of pulse signals/one rotation).

$C/(V+1)$ is a temperature correction term, and C is a correction value. In the present embodiment, the maximum value of the correction value C is a difference between the outside air temperature and a temperature of air reversely flowing through the radiator 3.

In the control equation (2), since the vehicle speed V becomes 0 or low speed at the time of idling, the temperature correction term is only the correction value C, and the calculated Pgo is suppressed to a low value by subtracting the correction value C from Tgo. When a vehicle runs normally, the temperature of the refrigerant is not increased by the reversely flowing air, and the term $(V+1)$ becomes greater than the correction value C. Therefore, the influence of the temperature correction term becomes substantially zero, and the calculation result of the control equation (2) is almost the same as that of the control equation (1) .

The air conditioning ECU 7 calculates the temperature correction term from the vehicle speed V and the correction value C which are read in step S102 (step S103) . Next, the air conditioning ECU 7 calculates the target refrigerant pressure Pgo by the control equation (2) using the constants A and B as well as the outlet refrigerant temperature Tgo read in the step S101 in the temperature correction term (step S104). The air conditioning ECU 7 obtains the decompression amount corresponding to the target refrigerant pressure Pgo such that the refrigerant pressure of the refrigeration cycle device 1 matches with the target refrigerant pressure Pgo, and converts the decompression amount into an electric signal (open/close duty signal), and sends the same to the expansion valve 4 (step S105).

In the above control, since the vehicle speed V becomes 0 at the time of idling of the vehicle, the temperature correction term is for the correction value C. By subtracting the correction value C from Tgo, the calculated target refrigerant pressure Pgo can be suppressed to a low level. With this configuration, since the refrigerant pressure which is set in the refrigeration cycle device 1 is suppressed to a low level at the time of idling of the vehicle, the outlet refrigerant temperature of the compressor 2 is not increased. Therefore, it is possible to avoid a case in which the device protection functions, the compressor 2 is stopped and the operation of the refrigeration cycle device 1 is stopped. Since the target refrigerant pressure Pgo which is set at the time of idling becomes equal to a value corrected by the temperature correction term, it is possible to set a refrigerant pressure which is suitable for the refrigeration cycle device 1.

When calculating is carried out using the general control equation (1), since the outlet refrigerant temperature Tgo of the radiator 3 is used as the calculation value as it is at the time of idling, the target refrigerant pressure Pgo becomes a high value.

When the vehicle runs normally, the temperature of the refrigerant is not increased by the reverse flow of air through the radiator 3 and thus, the term (V+1) becomes greater with respect to the correction value C. Therefore, the influence of the temperature correction term substantially becomes zero, and the same calculation result as that of the control equation (1) is obtained. Since the target refrigerant pressure Pgo does not receive the influence of the temperature correction term, it is possible to set a suitable refrigerant pressure for the refrigeration cycle device 1.

Therefore, according to the vehicular air conditioner of the present embodiment, it is possible to stably operate the refrigeration cycle device 1 when the vehicle is running and when the vehicle is idling.

In the present embodiment, the maximum value of the correction value C is the difference between the outside air temperature and the temperature of the reversely flowing air through the radiator 3. Therefore, it is possible to cancel the influence of the temperature of the reversely flowing air which is different depending upon the vehicle (vehicle type), and to precisely control the temperature.

In the present embodiment, the temperature correction term is obtained by dividing, by the vehicle speed, the correction value C which is the difference between the outside air temperature and the temperature of the reversely flowing air through the radiator 3, and the temperature correction term is included in the control equation (2) defined for calculating the target refrigerant pressure. Therefore, the effect of the temperature correction term can be obtained as the running wind is smaller and the cooling wind is smaller. It is unnecessary to set a threshold value in each of vehicle speed ranges such as a range from 0 to 30 km/h, a range from 31 to 40 km/h and a range from 41 to 100 km/h. Further, the control equation itself is simple, and it is unnecessary to enhance the processing ability of the air conditioning ECU 7 only if the air conditioning ECU 7 has normal processing ability.

Although the vehicle speed V is used in the temperature correction term in the present embodiment, the present invention is not limited to this. Other detection signals can be used if a parameter can be varied in accordance with the running speed and which can be read. For example, the number of revolutions of an engine detected by the revolution number sensor (not shown) provided on the engine unit 9 can be used.

The vehicular air conditioner of the present embodiment is especially suitable for a system in which the number of revolutions of the compressor is set high at the time of idling such as an electric compressor system which drives a compressor using a motor.

While the embodiment of the present invention has been described above, the invention is not limited to the above embodiment and changes and modifications can be made within the scope of the appended claims.

**Claims**

1. A vehicular air conditioner comprising a compressor (2) for compressing a refrigerant, a radiator (3) for cooling the refrigerant compressed by the compressor (2) by heat exchange with cooling wind, a temperature sensor (8) for detecting a refrigerant temperature on the side of an outlet of the radiator (3), a decompressor (4) for decompressing the refrigerant which passes through the radiator (3) in accordance with a designated decompression amount, an evaporator (5) for evaporating the refrigerant which passes through the decompressor (4) by heat exchange with conditioned wind, a gas/liquid separator (6) for separating the refrigerant discharged from the evaporator (5) into gas and liquid, and a control (7) for designating the decompression amount for the decompressor (4), wherein

   the control (7) calculates a target refrigerant pressure using the refrigerant temperature detected by the temperature sensor (8), and a control equation defined for calculating the target refrigerant pressure, and the control (7) designates the decompression amount corresponding to the target refrigerant pressure for the decompressor (4), **characterized in that** said vehicular air conditioner further comprises a vehicle speed detector (10) for detecting a vehicle speed, and **in that** said control (7) further calculates said target refrigerant pressure using a vehicle speed detected by the vehicle speed detector (10).

2. The vehicular air conditioner according to claim 1, wherein in the control equation defined for calculating the target refrigerant pressure, the control (7) defines a difference between a temperature of outside air and a temperature of a air which reversely flows through the radiator (3), as a maximum value of temperature to be used as a correction value.

3. The vehicular air conditioner according to claim 1 or 2, wherein the control (7) includes, in the control equation defined for calculating the target refrigerant pressure, a temperature correction term obtained by dividing, by the vehicle speed detected by the vehicle speed detector (10), a correction value which is a difference between a temperature of outside air and a temperature of air which reversely flows through the radiator (3).

**Patentansprüche**

1. Fahrzeugklimaanlage, die aufweist einen Kompressor (2) zum Komprimieren eines Kältemittels, einen Kühler (3) zum Kühlen des durch den Kompressor (2) verdichteten Kältemittels durch Wärmeaustausch mit kühlendem Wind, einen Temperatursensor (8) zum Erfassen einer Kältemitteltemperatur auf der Seite eines Auslasses des Kühlers (3), einen Druckminderer (4) zum Dekomprimieren des Kältemittels, das durch den Kühler (3) in Übereinstimmung mit einem benannten Druckminderungsbetrag hindurchgeht, einen Verdampfer (5) zum Verdampfen des Kältemittels, das durch den Druckminderer (4) durch Wärmeaustausch mit konditionierten Wind hindurchgeht, einen Gas- / Flüssigkeitsseparator (6) zum Separieren des von dem Verdampfer (5) abgegebenen Kältemittels in Gas und Flüssigkeit, und eine Steuerung (7) zum Bestimmen des Druckminderungsbetrags für den Druckminderer (4), wobei die Steuerung (7) den Ziel- Kältemitteldruck unter Verwendung der durch den Temperatursensor (8) erfassten Kältemitteltemperatur berechnet und eine Steuergleichung zum Berechnen des Ziel- Kältemitteldrucks definiert, und die Steuerung (7) den Druckminderungsbetrag entsprechend des Ziel- Kältemitteldrucks für den Druckminderer (4) bestimmt, **dadurch gekennzeichnet, dass** die Fahrzeugklimaanlage außerdem aufweist eine Fahrzeuggeschwindigkeits- Erfassungseinrichtung (10) zum Erfassen einer Fahrzeuggeschwindigkeit und indem die Steuerung (7) außerdem den Ziel- Kältemitteldruck unter Verwendung einer durch die Fahrzeuggeschwindigkeits- Erfassungseinrichtung (10) erfassten Fahrzeuggeschwindigkeit berechnet.

2. Fahrzeugklimaanlage nach Anspruch 1, wobei in der Steuerungsgleichung, die zum Berechnen des Ziel- Kältemitteldrucks gebildet worden ist, die Steuerung (7) eine Differenz zwischen einer Temperatur der Außenluft und einer Temperatur einer Luft bildet, die umgekehrt durch den Kühler (3) strömt, als ein Maximalwert der Temperatur, um als ein Korrekturwert gebraucht zu werden.

3. Fahrzeugklimaanlage nach Anspruch 1 oder 2, wobei die Steuerung (7) enthält, in der zur Berechnung des Ziel- Kältemitteldrucks gebildeten Steuergleichung, ein Temperaturkorrekturglied, erhalten durch Dividieren durch die Fahrzeuggeschwindigkeit, erfasst durch die Fahrzeuggeschwindigkeits- Erfassungseinrichtung (10), einen Korrekturwert, der eine Differenz zwischen einer Temperatur der Außenluft und einer Temperatur der Luft ist, die umgekehrt durch den Kühler (3) strömt.

**Revendications**

1. Climatisation de véhicule comprenant un compresseur (2) pour comprimer un réfrigérant, un radiateur (3) pour refroidir le réfrigérant comprimé par le compresseur (2) par échange de chaleur avec un courant d'air de refroidissement, un capteur de température (8) pour détecter une température de réfrigérant du côté d'une sortie du radiateur (3), un décompresseur (4) pour décomprimer le réfrigérant qui passe à travers le radiateur (3) selon une quantité de décompression déterminée, un évaporateur (5) pour évaporer le réfrigérant qui passe à travers le décompresseur (4) par échange de chaleur avec un courant d'air conditionné, un séparateur gaz/liquide (6) pour séparer le réfrigérant évacué de l'évaporateur (5) en gaz et liquide, et une commande (7) pour déterminer la quantité de décompression du décompresseur (4), dans laquelle

   la commande (7) calcule une pression de réfrigérant cible en utilisant la température de réfrigérant détectée par le capteur de température (8), et une équation de commande définie pour calculer la pression de réfrigérant cible, et la commande (7) détermine la quantité de décompression pour le décompresseur (4), **caractérisée en ce que** ladite climatisation de véhicule comprend en outre un détecteur de vitesse de véhicule (10) pour détecter une vitesse de véhicule, et **en ce que** ladite commande (7) calcule en outre ladite pression de réfrigérant cible en utilisant une vitesse de véhicule détectée par le détecteur de vitesse de véhicule (10).

2. Climatisation de véhicule selon la revendication 1, dans laquelle dans l'équation de commande définie pour calculer la pression de réfrigérant cible, la commande (7) définit une différence entre une température d'air extérieur et une température d'un air qui s'écoule inversement à travers le radiateur (3), comme une valeur maximum de température à utiliser comme valeur de correction.

3. Climatisation de véhicule selon la revendication 1 ou 2, dans laquelle la commande (7) inclut, dans l'équation de commande définie pour calculer la pression de réfrigérant cible, un terme de correction de température obtenu en divisant, par la vitesse de véhicule détectée par le détecteur de vitesse de véhicule (10), une valeur de correction qui est une différence entre une température de l'air extérieur et une température de l'air qui s'écoule inversement à travers le radiateur (3).

# FIG. 1

AIR CONDITIONING ECU **7**

VEHICLE SPEED (SIGNAL)

ENGINE UNIT **9**

**10**

OUTLET REFRIGERANT TEMPERATURE

**8**

**3**

**2**

**4**

**1**

**6**

**12**

**5**

**11**

TO PASSENGER ROOM

**13**

# FIG. 2

```
                    ┌──────────────┐
                    │    START     │
                    └──────────────┘
                           │
     ┌─────────────────────┤
     │                     ▼
     │   ┌─────────────────────────────────────┐
     │   │  READ OUTLET REFRIGERANT TEMPERATURE │ ～S101
     │   │        (Tgo) OF RADIATOR             │
     │   └─────────────────────────────────────┘
     │                     │
     │                     ▼
     │   ┌─────────────────────────────────────┐
     │   │        READ VEHICLE SPEED (V)         │ ～S102
     │   └─────────────────────────────────────┘
     │                     │
     │                     ▼
     │   ┌─────────────────────────────────────┐
     │   │  CALCULATE TEMPERATURE CORRECTION     │ ～S103
     │   │        TERM C/(V+1)                   │
     │   └─────────────────────────────────────┘
     │                     │
     │                     ▼
     │   ┌─────────────────────────────────────┐
     │   │  CALCULATE TARGET OUTLET REFRIGERANT  │
     │   │  PRESSURE (Pgo) BY CONTROL EQUATION   │ ～S104
     │   │     Pgo = A{Tgo-C/(V+1)}+B            │
     │   └─────────────────────────────────────┘
     │                     │
     │                     ▼
     │   ┌─────────────────────────────────────┐
     │   │     CONVERT DECOMPRESSION AMOUNT      │
     │   │   CORRESPONDING TO TARGET OUTLET      │
     │   │   REFRIGERANT PRESSURE (Pgo) INTO     │ ～S105
     │   │  ELECTRIC SIGNAL, AND SEND THE SAME   │
     │   │        TO EXPANSION VALVE             │
     │   └─────────────────────────────────────┘
     │                     │
     └─────────────────────┘
```

$$Pgo = A\{Tgo - C/(V+1)\} + B$$

**REFERENCES CITED IN THE DESCRIPTION**

**Patent documents cited in the description**

- JP 2000088364 A
- JP 2005145389 A
- JP 2002130849 A
- US 20050132731 A
- JP 2000206780 A